# EUROPEAN PATENT APPLICATION

(11) **EP 2 161 165 A1**
(43) Date of publication of application: **10.03.2010**
(21) Application number: 08163590.6
(22) Date of filing: 03.09.2008
(51) Int. Cl.: B60R 21/015, B60N 2/00

(54) **Capacitive vehicle seat occupant detector**

(71) Applicant: IEE INTERNATIONAL ELECTRONICS & ENGINEERING S.A., 6468 Echternach (LU)
(72) Inventor: Wendt, Christoph, 54296, Trier (DE); Petereit, Andreas, 54338, Schweich (DE)
(74) Representative: Office Freylinger

(57) **Abstract**

A method for detecting an occupant of a vehicle seat using a capacitive occupant detector equipped with a transmission antenna electrode and a reception antenna electrode having between them a space that can be occupied by an occupant of the vehicle seat comprises the steps: applying oscillating signals to the transmission antenna electrode and thereby inducing corresponding received oscillating signals in the reception antenna electrode, detecting the received oscillating signals and deciding on an occupancy state of the vehicle seat based upon capacitive coupling strength between the transmission antenna electrode and the reception antenna electrode through the space. At least one of the transmission and reception antenna electrodes comprises a first end portion, a second end portion and an intermediate portion resistively interconnecting the first and second end portion. The method comprises further determining capacitive coupling strengths between the end portions of the antenna electrode that comprises a first end portion, a second end portion and an intermediate portion and the other antenna electrode, as well as the derivation of an occupancy state of the vehicle seat based upon the capacitive coupling strengths determined.

## Description

### Technical field

The present invention generally relates to a capacitive vehicle seat occupancy state detector, in particular such detector comprising a transmitting antenna electrode and a reception antenna electrode arranged so that an occupant of the vehicle seat occupies at least part of the space between them when he or she is normally seated in the vehicle seat.

### Background Art

As used herein, the term capacitive occupant detector refers to a capacitive sensor adapted for detecting the occupancy state of a vehicle seat. A capacitive sensor, called by some electric field sensor or capacitive proximity sensor, designates a sensor, which generates a signal responsive to the influence of what is being sensed (a person, a part of a person's body, a pet, an object, etc.) upon an electric field. A capacitive sensor generally comprises at least one electrode, to which is applied an oscillating electric signal and which thereupon emits an electric field into a region of space proximate to the electrode, while the sensor is operating. Such capacitive sensor also has at least one sensing electrode -which could comprise the same electrode or electrodes, to which the oscillating electric signal is applied- at which the influence of an object or living being on the electric field is detected.

The technical paper entitled "Electric Field Sensing for Graphical Interfaces" by J. R. Smith, published in Computer Graphics I/O Devices, Issue May/June 1998, pp 54-60 describes the concept of electric field sensing as used for making non-contact three-dimensional position measurements, and more particularly for sensing the position of a human hand for purposes of providing three dimensional positional inputs to a computer. Within the general concept of capacitive sensing, the author distinguishes between distinct mechanisms he refers to as "loading mode", "shunt mode", and "transmit mode" which correspond to various possible electric current pathways. In the "loading mode", an oscillating voltage signal is applied to a transmit electrode, which builds up an oscillating electric field to ground. The object to be sensed modifies the capacitance between the transmit electrode and ground. In the "shunt mode", an oscillating voltage signal is applied to the transmit electrode, building up an electric field to a receive electrode, and the displacement current induced at the receive electrode is measured, whereby the displacement current may be modified by the body being sensed. In the "transmit mode", the transmit electrode is put in contact with the user's body, which then becomes a transmitter relative to a receiver, either by direct electrical connection or via capacitive coupling. "Shunt mode" is alternatively referred to as "coupling mode".

Capacitive occupant detectors have been proposed in great variety, e.g. for controlling the deployment of one or more airbags, such as e.g. a driver airbag, a passenger airbag and/or a side airbag. US patent 6,161,070, to Jinno et al., relates to a passenger detection system including a single antenna electrode mounted on a surface of a passenger seat in an automobile. An oscillator applies on oscillating voltage signal to the antenna electrode, whereby a minute electric field is produced around the antenna electrode. Jinno proposes detecting the presence or absence of a passenger in the seat based on the amplitude and the phase of the current flowing to the antenna electrode. US patent 6,392,542, to Stanley, teaches an electric field sensor comprising an electrode mountable within a seat and operatively coupled to a sensing circuit, which applies to the electrode an oscillating or pulsed signal "at most weakly responsive" to wetness of the seat. Stanley proposes to measure phase and amplitude of the current flowing to the electrode to detect an occupied or an empty seat and to compensate for seat wetness.

Whereas the patent documents mentioned in the previous paragraph relate to capacitive occupant detectors having a single electrode which is used for both the transmission of the electric field and the measurement of the influence of the occupying item thereon, US 5,844,486 discloses a capacitive occupant detector with separate transmission and reception electrodes. US 5,948,031 discloses capacitive occupant detector comprising a signal generator for generating an alternating current signal, a first electrode mounted on the vehicle and connected to the signal generator, the first electrode generating an electric field in response to the alternating current signal, a second electrode mounted on the vehicle and spaced from the first electrode such that a first current is generated in the second electrode in response to the electric field and an object in the vehicle; and a controller for measuring the first current, and for generating a restraint system command signal in response to a magnitude of the first current.

The above-cited documents are herewith incorporated herein by reference in their entirety.

### Technical problem

It is an object of the present invention to provide improved capacitive occupant detection for a vehicle seat. This object is achieved by a method as claimed in claim 1 or a detector as claimed in claim 2 or 14.

### General Description of the Invention

A method for detecting an occupant of a vehicle seat using a capacitive occupant detector equipped with a transmission antenna electrode and a reception antenna electrode having between them a space that can be occupied by an occupant of the vehicle seat comprises the steps: applying oscillating signals to the transmission antenna electrode and thereby inducing corresponding received oscillating signals in the reception antenna electrode, detecting the received oscillating signals and deciding on an occupancy state of the vehicle seat based upon capacitive coupling strength between the transmission antenna electrode and the reception antenna electrode through the space. At least one (possibly both) of the transmission and reception antenna electrodes comprises a first end portion, a second end portion and an intermediate portion resistively interconnecting the first and second end portion. The method comprises further determining capacitive coupling strengths between the end portions of the antenna electrode that comprises a first end portion, a second end portion and an intermediate portion and the other antenna electrode, as well as the derivation of an occupancy state of the vehicle seat based upon the capacitive coupling strengths determined.

A capacitive occupant detector for a vehicle seat (such as e.g. an automobile seat) comprises a transmission antenna electrode and a reception antenna electrode, these antenna electrodes having between them a space that can be occupied by an occupant of the vehicle seat. In other words, the transmission and reception antenna electrodes are arranged with respect to one another in such a way that the occupant influences the capacitance between these antenna electrodes by his or her presence within the space between the antenna electrodes. It should be noted that in the context of the present, the space between the transmission and reception electrodes is not confined to the space lying geometrically between these electrodes but shall be interpreted as a space occupied by electrical field lines extending between the transmission and reception antenna electrodes when the detector is in operation. Further to the antenna electrodes, the detector comprises a transmission circuit operatively connected to the transmission antenna electrode for applying oscillating signals to the transmission antenna electrode, which in turn cause corresponding oscillating signals (hereinafter referred to as "received oscillating signals") to be induced in the reception antenna electrode by capacitive coupling. The detector also comprises a detection circuit operatively connected to the reception antenna electrode for detecting the received oscillating signals and a classification logic configured for deciding on an occupancy state of the vehicle seat based upon capacitive coupling strength through the space between the transmission antenna electrode and the reception antenna electrode.

For implementing the above method, the invention comes in two variants, which may optionally be combined into a preferred implementation of the capacitive seat occupancy detector. According to the first variant of the invention, the transmission antenna electrode comprises a first end portion at which the transmission circuit has a first connection to the transmission antenna electrode, a second end portion at which the transmission circuit has a second connection to the transmission antenna electrode and an intermediate portion of electrically resistive material, which interconnects the first and second end portions. The transmission circuit is furthermore configured and arranged for driving into the transmission antenna electrode a first oscillating signal via the first connection and a second oscillating signal via the second connection, such first and second oscillating signals driven into the transmission antenna electrode being distinct from one another. Due to the resistivity of the intermediate portion of the transmission antenna electrode, oscillating signals applied to the end portion experience each a drop in amplitude of oscillation across the intermediate portion. When, during operation of the capacitive seat occupant detector, such first and second oscillating signals induce first and second received oscillating signals in the reception antenna electrode, respectively, the corresponding first and second received oscillating signals are also distinct from one another and can be separately analysed. The detection circuit is configured and arranged in such a way as to detect the first and second received oscillating signals separately from one another and the classification logic is configured and arranged as to determine an occupancy state of said vehicle seat based upon the capacitive coupling strengths indicated by the detected first and second received oscillating signals. Thus the detector determines at least two separate indicators of capacitive coupling, one relating to capacitive coupling between the reception antenna electrode and the first end portion of the transmission antenna electrode, and one relating to capacitive coupling between the reception antenna electrode and the second end portion of the transmission antenna electrode and the determination of the occupancy state is based upon these separate indicators. The end portions of the transmission antenna electrode are preferably arranged diametrically opposed to one another with respect to the intermediate portion of the transmission antenna electrode and disposed in different regions of the vehicle seat. Thus, the detector determines capacitive coupling indicators relating to different regions of the seat.

Preferably, the transmission circuit is configured and arranged for driving the first and second oscillating signals into the transmission antenna electrode at distinct times. The distinction between the first and second received oscillating signals may thus be effected using the knowledge of the transmission times. The detection circuit is thus preferably configured and arranged as to distinguish the first and second received oscillating signals based upon the distinct times at which the first and second oscillating signals are driven into the transmission antenna electrode. Preferably, when the first oscillating signal is applied through the first connection, the second connection is switched to a low potential (e.g. ground) and when the second oscillating signal is applied through the second connection, the first connection is switched to a low potential.

Additionally or alternatively, the first and second oscillating signals driven into the transmission antenna electrode are distinct by frequency. In this case, also the first and second received oscillating signals have substantially the same distinct frequencies, which allow them to be detected separately. Therefore, the detection circuit is preferably configured and arranged as to distinguish the first and second received oscillating signals based upon the distinct frequencies of the first and second oscillating signals driven into the transmission antenna electrode. The frequency or frequencies of the capacitive occupant detector are preferably situated within the frequency band ranging from 50 kHz to 1 MHz, more preferably within the frequency band from 80 kHz to 200 kHz.

The first and second oscillating signals driven into the transmission antenna electrode may comprise a first and second modulation, the modulations being distinct from one another. The distinct modulations of the first and second oscillating signals driven into the transmission antenna electrode translates into distinct modulations of the first and second received oscillating signals. Such distinctiveness by modulation can be in addition or in alternative to distinctiveness by time of transmission and/or by frequency. The detection circuit is thus preferably configured and arranged as to distinguish the first and second received oscillating signals based upon the distinct modulations of the first and second oscillating signals driven into the transmission antenna electrode. Suitable modulations are, for instance modulations using pseudo-random noise sequences, frequency modulation, etc.

The detection circuit preferably comprises a first current meter configured and arranged as to selectively detect the first received oscillating signal and a second current meter configured and arranged as to selectively detect the second received oscillating signal. For the purposes of the present, "selectively detecting" is intended to mean that of the received oscillating signals only a particular one is detected. A current meter may be made selective for a particular one of the received oscillating signals using a filter, for instance, a frequency filter (such as, e.g., low-pass, high-pass or band-pass filters or a combinations of same), a matched filter, etc. It shall be noted that if the first and second oscillating signals are only distinguished by the distinct time intervals during which they driven into the transmission antenna electrode, there is no necessity for signal-selective current meters.

In case the oscillating signals are to be driven into the transmission electrode at different times, the transmission circuit advantageously comprises a signal generator and a switching arrangement, the switching arrangement being configured for switching the signal generator alternately to the first end portion and the second end portion of the transmission electrode.

Alternatively, the transmission circuit can comprise a first signal generator operatively connected to the first end portion of the transmission antenna electrode and a second signal generator operatively connected to the second end portion of the transmission antenna electrode. The first and second signal generators may comprise, for instance, oscillators (such as, e.g., voltage-controlled oscillators, numerically controlled oscillators or direct digital synthesizers (DDS)), modulators, etc. In case the oscillating signals are to be driven into the transmission electrode at different times, the first and second signal generators may be operated at different times. Additionally or alternatively, the first and second signal generators may be so configured that the oscillating signals are distinct by frequency and/or modulation.

Turning now to the second variant of the invention, the reception antenna electrode comprises a first end portion at which the detection circuit has a first connection to the reception antenna electrode, a second end portion at which the detection circuit has a second connection to the reception antenna electrode, and an intermediate portion of resistive material interconnecting the first and second end portions of the reception antenna electrode. The detection circuit is in this variant configured and arranged as to detect the received oscillating signals both via the first connection and the first end portion of the reception antenna electrode and via the second connection and the second end portion of the reception antenna electrode, whereas the classification logic is configured and arranged as to determine the occupancy state of the vehicle seat based upon capacitive coupling strengths indicated by the received oscillating signals detected via the first connection and the first end portion of the reception antenna electrode and via the second connection and the second end portion of the reception antenna electrode. Thus, also in the second variant of the invention, the detector determines at least two separate indicators of capacitive coupling, one relating in this case to capacitive coupling between the first end portion of the reception antenna electrode and the transmission antenna electrode, and one relating to capacitive coupling between the second end portion of the reception antenna electrode and the transmission antenna electrode. The end portions of the reception antenna electrode are preferably arranged diametrically opposed to one another with respect to the intermediate portion of the reception antenna electrode and disposed in different regions of the vehicle seat. Preferably, in this second variant of the invention, the detection circuit comprises a first current meter connected to the first end portion of the detection antenna electrode for detecting the received oscillating signals via the first connection and the first end portion of the detection antenna electrode and a second current meter connected to the second end portion of the detection antenna electrode for detecting the received oscillating signals via the second connection and the second end portion of the detection antenna electrode. With two separate current meters, the received oscillating signals could be detected simultaneously in both end portions of the reception antenna electrode. The detection circuit could, alternatively, also comprise a single current meter switchable in alternance to the first and second end portions of the detection antenna electrode.

As indicated above, a combination of the two variants of the detector is an option. In this case, both the transmission antenna electrode and the reception antenna electrode comprise respective first and second end portions and respective intermediate portions of electrically resistive material. The transmission circuit and the detection circuit are preferably configured as described above.

Those skilled will appreciate that transmission circuit, detection circuit and classification logic taking its decisions based upon the readings of the received oscillating signals effected by the detection circuit may be integrated into a common circuit (such as, e.g., a microprocessor, an application-specific integrated circuit a field-programmable gate array or the like). Most preferably, in either variant, the capacitive occupant detector comprises a single transmission antenna electrode and a single reception antenna electrode. Nevertheless, embodiments of the invention with more than two antenna electrodes are also possible. An interesting advantage of the present invention is that with only two antenna electrodes one may obtain a spatial resolution, which could previously only be achieved by using at least three or four antenna electrodes. Taking into account that for many applications, each individual antenna electrodes needs to be checkable, when the system is operational, with respect to circuit integrity (e.g. whether it is interrupted or whether there is a short circuit, etc.), the present invention has the benefit over prior capacitive occupant detectors of greater simplicity without sacrifice of spatial resolution.

### Brief Description of the Drawings

Further details and advantages of the present invention will be apparent from the following detailed description of several not limiting examples with reference to the attached drawings, wherein:
Fig. 1 is a schematic diagram of a capacitive occupant detector according to the first variant of the invention;
Fig. 2 is a schematic diagram of a capacitive occupant detector according to the second variant of the invention;
Fig. 3 is a schematic diagram of a capacitive occupant detector, in which the first and second variants are combined;
Fig. 4 is a schematic view of a vehicle seat equipped with a capacitive occupant detector;
Fig. 5 is a schematic diagram of another embodiment of a capacitive occupant detector;
Fig. 6 is a schematic diagram of yet another embodiment of a capacitive occupant detector.

### Description of Preferred Embodiments

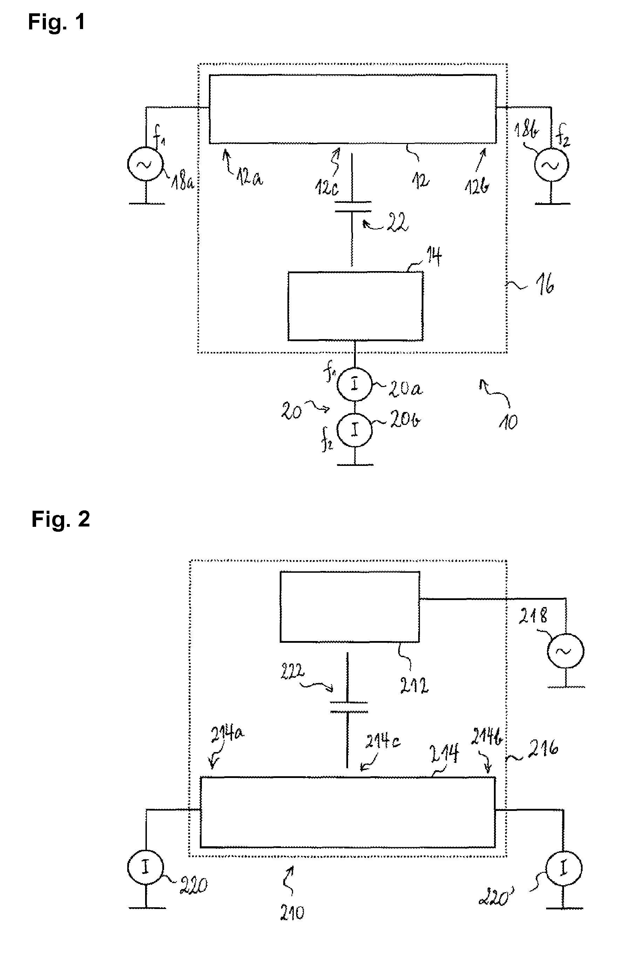

Fig. 1 shows a schematic of capacitive occupant detector 10, the transmission antenna electrode 12 and reception antenna electrode 14 of which are integrated into a vehicle seat (schematically shown at reference numeral 16) in such a way that an occupant of the vehicle seat 16 influences the capacitance between these antenna electrodes by his or her presence within the space between the antenna electrodes, i.e. on the seat. The detector 10 comprises a transmission circuit with oscillators 18a and 18b, connected to respective end portions 12a and 12b of the transmission antenna electrode 12, which are resistively interconnected by the intermediate portion 12c of the transmission antenna electrode. On the side of the reception antenna electrode 14, the detector 10 comprises a detection circuit 20, including current meters 20a and 20b. The impedance of the intermediate portion 12c between the end portions 12a and 12b preferably amounts to a value in the range from 50 Ω to 1 kΩ.

In operation, the first oscillator 18a drives a first oscillating signal at a first frequency f₁ into the transmission antenna electrode 12 and the second oscillator 18b drives a second oscillating signal at a second frequency f₂ (different from the first frequency) into it. Corresponding received oscillating signals at the two frequencies are thereby induced in the reception antenna electrode 14 by capacitive coupling (illustrated as capacitance 22). Those skilled will appreciate that the current that flows in the reception antenna electrode 14 in response to the oscillating signals being driven into the transmission antenna electrode 12 is the sum of a first current at the first frequency f₁ (induced by the first oscillating signal) and a second current at the second frequency f₂ (induced by the second oscillating signal). The current meters 20a and 20b selectively detect the received oscillating signals at the first and second frequency, respectively. To this end, each of the current meters 20a and 20b preferably comprises a dedicated filter (not shown) eliminating or attenuating undesired frequencies. The strength of the capacitive coupling (and thus the amplitudes of the first and second received oscillating signals) between the transmitting and the receiving electrode depends on presence, size and, in the present invention, also on position and posture of an occupying item (i.e. an object or occupant positioned on the vehicle seat). In this variant of the invention the detection circuit may decide on presence and/or type of occupying item based upon the capacitive coupling between the first end portion 12a of the transmission antenna electrode and the reception electrode on the one hand, and the capacitive coupling between the second end portion 12b of the transmission antenna electrode and the reception antenna electrode on the other hand. The ratio of the current amplitudes measured in the first and second current meters 20a, 20b, respectively, indicates the ratio of the capacitive couplings just mentioned. Those skilled will be aware that in case of resistive coupling in addition to capacitive coupling between the transmission and the reception antenna electrode (e.g. if the seat is wet), the ratio of the capacitive couplings is indicated by the ratio of the quadrature (or 90°-out-of-phase) components of the measured currents (in case of sine-wave oscillating signals driven into the transmission antenna electrode). Likewise, the ratio of the resistive couplings is indicated by the ratio of the in-phase components of the measured currents. Accordingly, it can for instance be deduced from capacitive coupling ratio whether the occupant is located closer to the first end portion 12a or the second end portion 12b of the transmission antenna electrode. The detection circuit further comprises a logic (not shown) issuing an occupancy state signal indicating the occupancy state (e.g. "empty seat", "small object", "pet", "small occupant", "normal occupant", etc.) deduced from the received oscillating signals. The occupancy state signal may be used by other components of the vehicle, e.g. a seat belt reminder or an airbag inflation control unit.

Fig. 2 shows a schematic of a capacitive occupant detector 210, configured according to the second variant of the invention. The transmission antenna electrode 212 and reception antenna electrode 214 of the detector 210 are integrated into a vehicle seat (schematically shown at reference numeral 216) in such a way that an occupant of the vehicle seat 216 influences the capacitance between these antenna electrodes by his or her presence within the space between the antenna electrodes, i.e. on the seat. The detector 210 comprises a transmission circuit with an oscillator 218 connected to the transmission antenna electrode 212. On the side of the reception antenna electrode 214, the detector 210 comprises a detection circuit, including current meters 220 and 220'. The current meters 220 and 220' are connected to a first end portion 214a and a second end portion 214b of the reception antenna electrode, respectively. The end portions 214a, 214b are resistively interconnected with one another by a resistive intermediate portion 214c of the reception antenna electrode. The impedance of the intermediate portion 214c of the reception electrode is high (e.g. 5 times higher) compared to the input impedance of the current meters 220 and 220'.

In operation, the oscillator 218 drives an oscillating signal at a first frequency f₁ into the transmission antenna electrode 212. A corresponding received oscillating signal is thereby induced in the reception antenna electrode 214 by capacitive coupling (illustrated as capacitance 222). The current meters 220 and 220' detect the received oscillating signals at the first and second end portions 214a and 214b of the reception antenna electrode, respectively. In this variant of the invention, the detection circuit may decide on presence and/or type of occupying item based upon the capacitive coupling between the transmission antenna electrode 212 and the first end portion 214a of the reception electrode on the one hand, and the capacitive coupling between the transmission antenna electrode 212 and the second end portion 214b of the reception antenna electrode on the other hand. The ratio of the currents measured in the first and second current meters 220, 220', respectively, indicates the ratio of the capacitive couplings just mentioned. Accordingly, it can for instance be deduced from this ratio whether the occupant is located closer to the first end portion 214a or the second end portion 214b of the reception antenna electrode. The detection circuit further comprises a logic (not shown) issuing an occupancy state signal indicating the occupancy state (e.g. empty seat, small object, small occupant, heavy occupant) deduced from the received oscillating signals. The occupancy state signal may be used by other components of the vehicle, e.g. a seat belt reminder or an airbag inflation control unit.

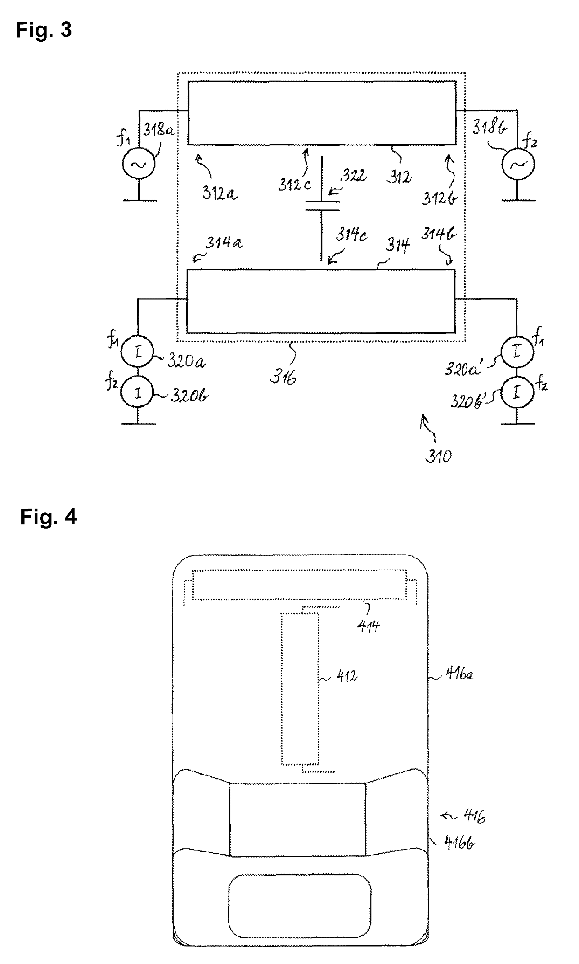

In Fig. 3, a capacitive occupant detector 310 is shown, which uses the features of both variants of the invention. The detector comprises a transmission antenna electrode 312 and reception antenna electrode 314, which are integrated into a vehicle seat 316 in such a way that an occupant of the vehicle seat 316 influences the capacitance between these antenna electrodes 312, 314 by his or her presence within the space between the antenna electrodes, i.e. on the seat. The detector 310 comprises a transmission circuit with oscillators 318a and 318b, connected to respective end portions 312a and 312b of the transmission antenna electrode 312, which are resistively interconnected by the intermediate portion 312c of the transmission antenna electrode. The impedance of the intermediate portion 312c between the end portions 312a and 312b preferably amounts to between 50 Ω and 1 kΩ. The detector 310 further comprises a detection circuit, including current meters 320a, 320b, 320a' and 320b'. Current meters 320a and 320b are connected to the first end portion 314a of the reception antenna electrode whereas current meters 320a' and 320b' are connected to the second end portion 314b of the reception antenna electrode. The end portions 314a, 314b are resistively interconnected with one another by a resistive intermediate portion 314c of the reception antenna electrode. The impedance of the intermediate portion 314c of the reception electrode is high (e.g. 5 times higher) compared to the input impedance of the current meters.

In operation, the first oscillator 318a drives a first oscillating signal at a first frequency f₁ into the transmission antenna electrode 312 and the second oscillator 318b drives a second oscillating signal at a second frequency f₂ (different from the first frequency) into it. Corresponding received oscillating signals at the two frequencies are thereby induced in the reception antenna electrode 314 by capacitive coupling (illustrated as capacitance 322). As in the example of Fig. 1, the current that flows in the reception antenna electrode in response to the oscillating signals being driven into the transmission antenna electrode is the sum of a first current at the first frequency f₁ (induced by the first oscillating signal) and a second current at the second frequency f₂ (induced by the second oscillating signal). The current meters 320a and 320a' are configured so as to selectively detect the received oscillating signals at the first frequency f₁, whereas current meters 320b and 320b' are configured so as to selectively detect the received oscillating signals at the second frequency f₂. Each of the current meters preferably comprises a dedicated filter (not shown) eliminating or attenuating the respective undesired frequencies. With current meters 320a, 320b, 320a' and 320b', the detection circuit performs four measurements, yielding four current values: I_{f1} at current meter 320a, I_{f2} at current meter 320b, I_{f1}' at current meter 320a' and I_{f2}' at current meter 320b'. The ratio R₁=(I_{f1}+I_{f1}')/(I_{f2}+I_{f2}') indicates the relative capacitive coupling strength between the first end portion 312a of the transmission antenna electrode and the reception antenna electrode 314 in comparison to the capacitive coupling strength between the second end portion 312b of the transmission antenna electrode and the reception antenna electrode 314. Thus the ratio R₁ contains the information whether the occupant is located more towards the first end portion 312a of the transmission antenna electrode or more towards the second end portion 312b of the transmission antenna electrode. The ratio R₂=(I_{f1}+I_{f2})/(I_{f1}'+I_{f2}') indicates the relative capacitive coupling strength between the transmission antenna electrode and the first end portion 314a of the reception antenna electrode 314 in comparison to the capacitive coupling strength between the transmission antenna electrode and the second end portion 314b of the reception antenna electrode 314. Thus the ratio R₂ contains the information whether the occupant is located more towards the first end portion 314a of the reception antenna electrode or more towards the second end portion 314b of the reception antenna electrode. As in the previous examples, the detection circuit further comprises a logic (not shown) issuing an occupancy state signal, which may be used by other components of the vehicle.

Fig. 4 shows a possible arrangement of the transmission and reception antenna electrodes 412, 414 within the seating portion 416a of an automobile seat 416. In the shown arrangement, the reception antenna electrode is disposed along the front part (sometime called the "waterfall edge") of the seat whereas the transmission antenna electrode is disposed substantially along the medial symmetry plane of the seat 416. Both antenna electrodes are preferably placed between the seat foam and the seat cover (trim), so that they are close to the seat surface but remain hidden to a seat occupant. The antenna electrodes 412 and 414 are shown as having elongated shapes. Transmission and detection circuits are not shown in Fig. 4, only their possible connections to the antenna electrodes are outlined at the end portions thereof. It should be noted that the geometrical arrangement of the antenna electrodes of Fig. 4 may be used with any of the variants of the present invention. The positions of the transmission and reception antenna electrodes could be exchanged for one another, depending e.g. on whether the system is intended to detect the longitudinal or the lateral position of an occupying item, or both. For instance, using the capacitive occupant detector of Fig. 1 in the arrangement of Fig. 4 (substituting items 412 and 414 by items 12 and 14, respectively), it is possible to collect information about the longitudinal position of an occupant. By switching the roles of the transmission and reception antenna electrodes one may collect information about the lateral position instead. Using the capacitive occupant detector of Fig. 2 in the arrangement of Fig. 4 (substituting items 412 and 414 by items 212 and 214, respectively), lateral position information on an occupant may be retrieved. Switching the roles of the antenna electrodes enables the detector in this case to collect information about the longitudinal position of an occupant. Using the capacitive occupant detector of Fig. 3 in the arrangement of Fig. 4 (substituting items 412 and 414 by items 312 and 314, respectively), lateral and longitudinal position information on an occupant may be retrieved.

Those skilled will appreciate that shape, size and position of the transmission and reception antenna electrodes can be adapted and optimized in accordance with actual seat design and classification target. While detectors having only one transmission and only one reception electrode are in certain cases preferred, it is possible, of course, to have more than one transmission and/or sensing electrodes.

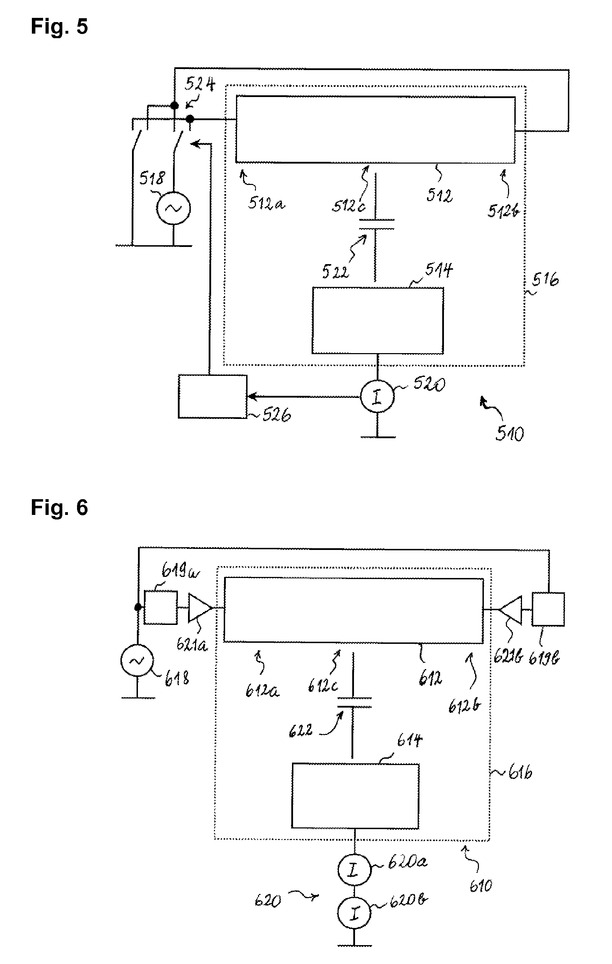

Fig. 5 shows another embodiment of a capacitive occupant detector 510. A transmission antenna electrode 512 and a reception antenna electrode 514 of the detector 510 are integrated into a vehicle seat 516 in such a way that an occupant of the vehicle seat 516 influences the capacitance between these antenna electrodes by his or her presence within the space between the antenna electrodes, i.e. on the seat. The detector 510 comprises a transmission circuit with an oscillator 518, operatively connected (by an electrically controlled switching arrangement 524) to the end portions 512a and 512b of the transmission antenna electrode 512, which are resistively interconnected by the intermediate portion 512c of the transmission antenna electrode. On the side of the reception antenna electrode 514, the detector 510 comprises a detection circuit, including a current meter 520. The current meter 520 is connected to a classification logic 526, which is configured so as to determine an occupancy state of the seat and issue a corresponding occupancy state signal. The impedance of the intermediate portion 512c between the end portions 512a and 512b preferably amounts to a value in the range from 50 Ω to 1 kΩ.

In operation, the classification logic 256 control the switching arrangement 524 in such a way that it connects the oscillator 518 in alternance to the first end portion 512a and the second end portion 512b of the transmission antenna electrode 512. That end portion of the transmission electrode that is currently not connected to the oscillator 518 is connected to ground by the switching arrangement 524. Thus, the oscillator 518 drives oscillating signals into alternately the first and the second end portion of the transmission antenna electrode 512. Corresponding received oscillating signals are thus induced in the reception antenna electrode 514 by capacitive coupling (illustrated as capacitance 522). The current meter 520 detects the currents flowing in the reception antenna electrode 514. A signal indicative of the measured current values is fed to the classification logic 526. In this variant of the invention, the classification logic decides on presence and/or type of occupying item based, on the one hand, upon the currents measured during the time intervals in which the oscillator 518 is connected to the first end portion of the transmission antenna electrode (indicating the capacitive coupling between the first end portion 512a of the transmission antenna electrode and the reception electrode) and, on the other hand, upon the currents measured during the time intervals in which the oscillator 518 is connected to the second end portion 512b of the transmission antenna electrode (indicating the capacitive coupling between the second end portion 512b of the transmission antenna electrode and the reception antenna electrode). The classification logic then issues an occupancy state signal indicating the occupancy state.

Fig. 6 represents yet another embodiment of a capacitive occupant detector 610. A transmission antenna electrode 612 and a reception antenna electrode 614 of the detector 610 are integrated into a vehicle seat 616 in such a way that an occupant of the vehicle seat 616 influences the capacitance between these antenna electrodes by his or her presence within the space between the antenna electrodes, i.e. on the seat. The detector 610 comprises a transmission circuit with an oscillator 618, a first modulator 619a (connected to a first end portion 612a of the transmission antenna electrode via buffer amplifier 621 a) and a second modulator 619b (connected to a second end portion 612b of the transmission antenna electrode via buffer amplifier 621 b). On the side of the reception antenna electrode 614, the detector 610 comprises a detection circuit 620, including a first current meter 620a and a second current meter 620b. When the detector 610 is in operation, the first and second modulators modulate a carrier signal from the oscillator with different mutually orthogonal pseudo-random noise codes. Consequently, modulated oscillating signals are also induced in the reception antenna electrode 614. The first current meter 620a comprises a filter (not shown) matched to the modulation of the first modulator 619a and measures the current induced by the oscillating signal driven into the first end portion 612a of the transmission antenna electrode, whereas the second current meter 620b comprises a filter (not shown) matched to the modulation of the second modulator 620b and measures the current induced by the oscillating signal driven into the second end portion 612b of the transmission antenna electrode. Although not shown in the drawing, the detector 610 also comprises a classification logic determining the occupancy state of the vehicle seat based upon the currents measured in the first and second current meters, respectively.

For the purposes of the present invention, antenna electrodes are preferably textile electrodes (knitted, woven or non-woven sheets comprising electrically conductive or resistive fibers or coated with electrically conductive or resistive material) or film-based electrodes (i.e. conductive layers on electrically insulating flexible substrate film). When in the context of the present, reference has been made to an antenna electrode having a resistive intermediate portion, such antenna electrode may be entirely made of resistive material (e.g. with substantially uniform resistance over the entire antenna electrode). Alternatively, such antenna electrode could comprise end portions made of conductive material having a resistive portion (e.g. a discrete resistor) arranged there between.

## Claims

1. Method for detecting an occupant of a vehicle seat using a capacitive occupant detector comprising a transmission antenna electrode and a reception antenna electrode having between them a space that can be occupied by an occupant of said vehicle seat, said method comprising applying oscillating signals to said transmission antenna electrode and thereby inducing corresponding received oscillating signals in said reception antenna electrode,
detecting said received oscillating signals and deciding on an occupancy state of said vehicle seat based upon capacitive coupling strength between said transmission antenna electrode and said reception antenna electrode through said space,
**characterised in that** at least one of said transmission and reception antenna electrodes comprises a first end portion, a second end portion and an intermediate portion resistively interconnecting said first and second end portion and **in that** said method comprises determining capacitive coupling strengths between the end portions of said antenna electrode comprising a first end portion, a second end portion and an intermediate portion and the other antenna electrode and deriving an occupancy state of said vehicle seat based upon said capacitive coupling strengths determined.

2. Capacitive occupant detector for a vehicle seat, comprising
a transmission antenna electrode and a reception antenna electrode, said transmitting and reception antenna electrodes having between them a space that can be occupied by an occupant of said vehicle seat;
a transmission circuit operatively connected to said transmission antenna electrode for applying oscillating signals to said transmission antenna electrode and thereby inducing corresponding received oscillating signals in said reception antenna electrode;
a detection circuit operatively connected to said reception antenna electrode for detecting said received oscillating signals;
a classification logic connected to said detection circuit and configured for deciding on an occupancy state of said vehicle seat based upon capacitive coupling strength between said transmission antenna electrode and said reception antenna electrode through said space;
**characterised in that** said transmission antenna electrode comprises a first end portion at which said transmission circuit has a first connection to said transmission antenna electrode, a second end portion at which said transmission circuit has a second connection to said transmission antenna electrode and an intermediate portion of electrically resistive material, which interconnects said first and second end portions,
**in that** said transmission circuit is configured and arranged for driving into said transmission antenna electrode a first oscillating signal via said first connection and a second oscillating signal via said second connection, wherein such first and second oscillating signals driven into said transmission antenna electrode are distinct, wherein such first and second oscillating signals induce first and second received oscillating signals in said reception antenna electrode, respectively, in such a way that said first and second received oscillating signals are distinct,
**in that** said detection circuit is configured and arranged in such a way as to detect said first and second received oscillating signals separately from one another,
and **in that** said classification logic is configured and arranged as to determine an occupancy state of said vehicle seat based upon capacitive coupling strengths indicated by said detected first and second received oscillating signals.

3. The detector as claimed in claim 2, wherein said transmission circuit is configured and arranged for driving said first and second oscillating signals into said transmission antenna electrode at distinct times.

4. The detector as claimed in claim 3, wherein said detection circuit is configured and arranged as to distinguish said first and second received oscillating signals based upon the distinct times at which said first and second oscillating signals are driven into said transmission antenna electrode.

5. The detector as claimed in any one of claims 2 to 4, wherein said first and second oscillating signals driven into said transmission antenna electrode are distinct by frequency and wherein said detection circuit is configured and arranged as to distinguish said first and second received oscillating signals based upon the distinct frequencies of said first and second oscillating signals driven into said transmission antenna electrode.

6. The detector as claimed in any one of claims 2 to 5, wherein said first and second oscillating signals driven into said transmission antenna electrode comprise a first and second modulation, said modulations being distinct from one another.

7. The detector as claimed in claim 6, wherein said detection circuit is configured and arranged as to distinguish said first and second received oscillating signals based upon the distinct modulations of said first and second oscillating signals driven into said transmission antenna electrode.

8. The detector as claimed in any one of claims 5 to 7, wherein said detection circuit comprises a first current meter configured and arranged as to selectively detect the first received oscillating signal and a second current meter configured and arranged as to selectively detect the second received oscillating signal.

9. The detector as claimed in any one of claims 2 to 8, wherein said transmission circuit comprises a signal generator and a switching arrangement, said switching arrangement being configured for switching said signal generator alternately to said first end portion and said second end portion of said transmission electrode.

10. The detector as claimed in any one of claims 2 to 8, wherein said transmission circuit comprises a first signal generator operatively connected to said first end portion of said transmission antenna electrode and a second signal generator operatively connected to said second end portion of said transmission antenna electrode.

11. The detector as claimed in any one of claims 2 to 10, wherein said reception antenna electrode comprises a first end portion at which said detection circuit has a first connection to said reception antenna electrode, a second end portion at which said detection circuit has a second connection to said reception antenna electrode and an intermediate portion of electrically resistive material interconnecting said first and second end portions of said reception antenna electrode, wherein said detection circuit is configured and arranged to detect said first and second received oscillating signals via said first connection and said first end portion of said reception antenna electrode and via said second connection and said second end portion of said reception antenna electrode.

12. The detector as claimed in claim 11, wherein said detection circuit comprises a first current meter connected to said first end portion of said detection antenna electrode for detecting the first and second received oscillating signals separately from one another and a second current meter connected to said second end portion of said detection antenna electrode for detecting the first and second received oscillating signals separately from one another.

13. Capacitive occupant detector for a vehicle seat, comprising
a transmission antenna electrode and a reception antenna electrode, said transmitting and reception antenna electrodes having between them a space that can be occupied by an occupant of said vehicle seat;
a transmission circuit operatively connected to said transmission antenna electrode for applying oscillating signals to said transmission antenna electrode and thereby inducing corresponding receiving oscillating signals in said reception antenna electrode;
a detection circuit operatively connected to said reception antenna electrode for detecting said received oscillating signals;
a classification logic configured for deciding on an occupancy state of said vehicle seat based upon capacitive coupling strength between said transmission antenna electrode and said reception antenna electrode through said space;
**characterised in that** said reception antenna electrode comprises a first end portion at which said detection circuit has a first connection to said reception antenna electrode, a second end portion at which said detection circuit has a second connection to said reception antenna electrode, and an intermediate portion of resistive material interconnecting said first and second end portions,
**in that** said detection circuit is configured and arranged to detect said received oscillating signals via said first connection and said first end portion of the reception antenna electrode and via said second connection and said second end portion of the reception antenna electrode
and **in that** classification logic is configured and arranged as to determine an occupancy state of said vehicle seat based upon capacitive coupling strengths indicated by said received oscillating signals detected via said first connection and said first end portion of the reception antenna electrode and via said second connection and said second end portion of the reception antenna electrode.

14. The detector as claimed in claim 13, wherein said detection circuit comprises a first current meter connected to said first end portion of said detection antenna electrode for detecting said received oscillating signals via said first connection and said first end portion of said detection antenna electrode and a second current meter connected to said second end portion of said detection antenna electrode for detecting said received oscillating signals via said second connection and said second end portion of said detection antenna electrode.
